# EUROPEAN PATENT SPECIFICATION

(11) **EP 2 669 166 B1**
(45) Date of publication and mention of the grant of the patent: **23.09.2020**
(21) Application number: 12188333.4
(22) Date of filing: 12.10.2012
(51) Int. Cl.: B62J 9/12, B62J 17/02

(54) **Saddle riding type vehicle**
Sattelfahrzeug
Véhicule à monture

(30) Priority: 28.05.2012 JP 2012120810
(43) Date of publication of application: 04.12.2013
(73) Proprietor: Yamaha Hatsudoki Kabushiki Kaisha, Iwata-shi, Shizuoka-ken 438 (JP)
(72) Inventor: Hanai, Tetsuya, Shizuoka, 438-8501 (JP)
(74) Representative: Zimmermann, Tankred Klaus

(56) References cited:
- EP-A1- 2 017 168
- EP-A1- 2 055 621
- EP-A1- 2 128 007
- EP-A2- 2 311 716
- US-A1- 2006 021 814
- US-A1- 2006 193 143
- US-A1- 2007 236 949
- US-A1- 2008 030 041

## Description

### BACKGROUND

### TECHNICAL FIELD

The present invention relates to a saddle riding type vehicle, and more specifically to a saddle riding type vehicle provided with a handle cover and a front cover.

### DESCRIPTION OF THE BACKGROUND ART

A motorcycle is known as one of saddle riding type vehicles. A motorcycle disclosed by JP-A 2007-283927 for example includes a handle cover, a front cover, and a rear cover. The front cover is provided with a headlight, a position light, and a flasher. The headlight is provided in the center in the vehicle-widthwise direction. The headlight includes a headlight bulb. The headlight bulb is provided in the center in the vehicle-widthwise direction. The position light is provided under the headlight bulb. The flasher is provided above the headlight and more on the outer side in the vehicle-widthwise direction than a vehicle widthwise end of the headlight. The rear cover is provided with a pocket that can store items. In general, the pocket is provided on the outer side of the head pipe in the vehicle-widthwise direction.

US 2006/193143 A1 is considered as the closest prior art and discloses a saddle riding type vehicle, comprising: a head pipe; a steering shaft inserted in the head pipe rotatably relative to the head pipe; a handle connected to an upper part of the steering shaft; a handle cover covering the handle; a front cover that covers a front part of the head pipe and is inclined upward and backward from the front; a rear cover that covers a rear part of the head pipe and extends at least in an up-down direction; a footboard connected to a lower part of the rear cover; a headlight positioned at a center of the front cover in a vehicle widthwise direction; a position light attached at the front cover; and a flasher attached at the front cover and positioned above the position light, wherein the flasher includes a flasher bulb, and in a front view, at least a part of the position light is provided in a position between the virtual horizontal line through the upper end of the headlight and the virtual horizontal line through the lower end of the headlight in a height-wise direction.

EP 2 128 007 A1 discloses a motorcycle comprising an inner rack provided in an inner cover.

### SUMMARY

It is an object of the present invention to provide a saddle riding type vehicle provided with a sufficiently large pocket that allows light from a headlight bulb and light from a position light to be distinguished from each other more easily and a front cover to be kept from becoming large in size in the up-down direction.

This object is achieved by a saddle riding type vehicle according to claim 1.

In the motorcycle disclosed by JP-A 2007-283927, light from the headlight bulb and light from the position light overlap because the position light is provided under the headlight bulb. Therefore, it is difficult to distinguish between light from the headlight and light from the position light.

In order to distinguish light from the headlight bulb and light from the position light, the position light may be provided on the outer side of the headlight in the vehicle widthwise direction.

If the position light is provided on the outer side of the headlight in the vehicle widthwise direction, however, the position of the pocket and the position of the position light overlap, so that the pocket can be reduced in size.

In order to prevent the pocket from becoming smaller in size by shifting the position of the position light from the position of the pocket in an up-down (vertical) direction, the width of the front cover in the up-down direction may be increased. If the width of the front cover in the up-down direction is increased, however, the position of the handle cover moves upward. In other words, the arrangement with a front cover having an increased width in the up-down direction makes it difficult for the rider to ride the vehicle.

A saddle riding type vehicle according to the present invention includes a head pipe, a steering shaft, a handle, a handle cover, a front cover, a rear cover, a footboard, a headlight, a pocket, a position light, and a flasher. The steering shaft is inserted in the head pipe rotatably relative to the head pipe. The handle is connected to an upper part of the steering shaft. The handle cover covers the handle. The front cover covers a front part of the head pipe and is inclined upward and backward from the front. The rear cover covers a rear part of the head pipe and extends at least in the up-down direction. The footboard is connected to a lower part of the rear cover. The headlight is attached in a center of the front cover in the vehicle widthwise direction. The pocket is provided at the rear cover on an outer side of the head pipe in the vehicle widthwise direction and in a position that overlaps the headlight in the up-down direction. The position light is attached to the front cover and provided in a position that overlaps the pocket in the vehicle widthwise direction. The flasher is attached to the front cover and provided above the position light. The headlight includes a headlight bulb. The flasher includes a flasher bulb. The pocket includes a first opening and a bottom. The pocket extends as it is inclined forward and downward from the first opening. The bottom is positioned at a lower end of the pocket. An upper end of the position light overlaps the bottom in the up-down direction. The position light is provided in such a position that at least a part of the position light overlaps the headlight in a height-wise direction. The headlight bulb is positioned in a center in the vehicle widthwise direction. The flasher bulb is positioned above the pocket.

Here, the position light is not positioned below the headlight bulb. This makes it easier to distinguish between light from the headlight bulb and light from the position light. In the above-described saddle riding type vehicle, an upper end of the position light is in a position that overlaps the bottom of the pocket in the up-down direction. Here, the flasher bulb is positioned above the pocket. An upper end of the position light is in a position that overlaps the bottom of the pocket. Therefore, the pocket can be kept from becoming small because of the positioning of the position light and the pocket can have a sufficiently large size. Therefore, in the above-described saddle riding type vehicle, light from the headlight bulb and light from the position light can be distinguished from each other more easily, the front cover can be prevented from becoming large in size, and the pocket can have a sufficiently large size.

### BRIEF DESCRIPTION OF THE DRAWINGS

Fig. 1 is a left side view of an overall structure of a motorcycle according to an embodiment of the present invention.
Fig. 2 is an overview of a front surface of a front cover.
Fig. 3 is a view of a rear cover seen from the rider's side.
Fig. 4 is a side view of the front cover viewed from a side.
Fig. 5 is a view showing the positional relation among a headlight, a position light, a flasher, and a pocket.

### DESCRIPTION OF THE EMBODIMENTS

In an arrangement in which the front cover of a motorcycle is provided with a headlight, a position light, and a flasher, if the bulb of the position light is provided under the bulb of the headlight, light from the headlight and light from the position light overlap and these kinds of light cannot easily be distinguished from each other.

The position light may be provided on the outer side of the headlight in the vehicle-widthwise direction so that light from the headlight bulb and light from the position light bulb can be distinguished from each other. However, if the position light is simply provided on the outer side of the headlight in the vehicle-widthwise direction, the position of the pocket and the position of the position light can overlap, which reduces the size of the pocket.

It may be possible to increase the width of the front cover in the up-down direction in order to prevent the pocket from becoming small in size because of the vertical shift between the positions of the position light and the pocket. If the size of the front cover in the vehicle widthwise direction increases, however, the position of the handle cover changes in the upward direction. Therefore, the increase in the size of the front cover in the vehicle widthwise direction makes it difficult for a rider to ride the vehicle.

The inventor came up with an idea of preventing the front cover from increasing in size and still allowing the pocket to have a sufficient size based on a positional arrangement of a position light, a headlight, a flasher, and a pocket.

The inventor employed an arrangement in which the bulb of the position light is not positioned under the headlight bulb. In this way, light from the headlight bulb and light from the position light bulb can be distinguished from each other.

The inventor provided a pocket on the outer side of a head pipe in the vehicle width-wise direction and a position light in a position overlapping the pocket in the vehicle widthwise direction. The inventor employed an arrangement in which an upper end of the position light overlaps a bottom part of the pocket in the up-down direction. Therefore, a pocket with a sufficient size can be secured even when the position light is provided in the back.

Now, a saddle riding type vehicle according to an embodiment of the present invention will be described in conjunction with the accompanying drawings. Note that in the following, a scooter type motorcycle 10 will be described as an example of the saddle riding type vehicle. In the drawings, the same or corresponding portions are designated by the same reference characters and their description will not be repeated.

### Overall Structure

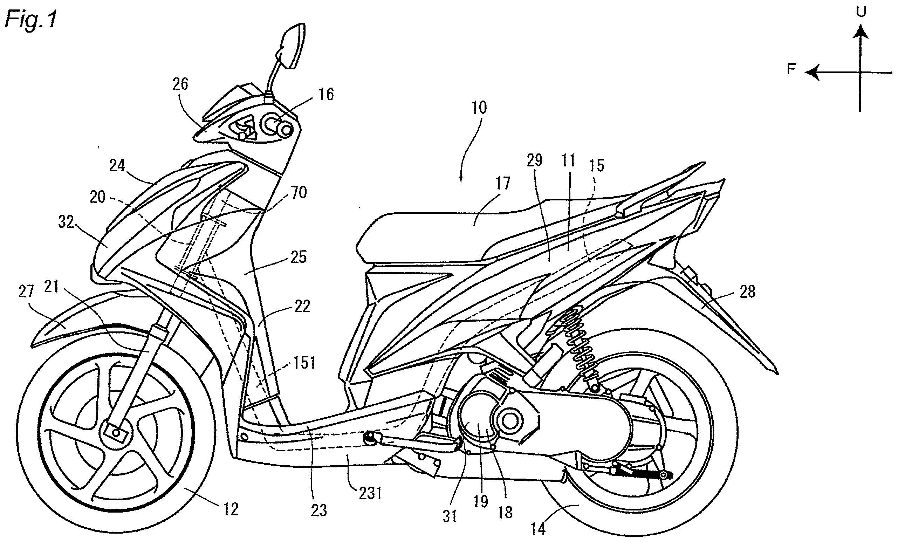

Fig. 1 is a left side view of the entire motorcycle 10 according to the present invention. Note that in the following description, the front, rear, left, and right refer to these directions viewed from a rider seated on the seat 17 of the motorcycle 10 that will be described. In the following, the arrow F in the drawings indicates the forward direction of the motorcycle 10. The arrow U in the drawings indicates the upward direction of the motorcycle 10. The arrow R in the drawings indicates the rightward direction of the motorcycle 10. The arrow L indicates the leftward direction of the motorcycle 10. Here, the center in the vehicle widthwise direction refers to a center in the widthwise direction of the vehicle body. In other word, the vehicle widthwise center refers to the position of the center when the motorcycle is viewed from the front. The outer side in the vehicle-widthwise direction indicates a direction toward the right or left from the vehicle-widthwise center. The inner side in the vehicle-widthwise direction indicates a direction toward the vehicle-widthwise center from the right or left.

The motorcycle 10 includes a vehicle main body 11, a front wheel 12 provided at a front part of the motorcycle 10, and a rear wheel 14 provided at a rear part of the motorcycle 10.

The vehicle main body 11 mainly includes a vehicle body frame 15, a handle 16, the seat 17, and a power unit 18.

The vehicle body frame 15 supports the power unit 18, the seat 17, and the like. The power unit 18 includes an engine 19 and a driving system. The vehicle body frame 15 is indicated by a broken line in Fig. 1. The vehicle body frame 15 includes a head pipe 20. The head pipe 20 is inclined downward in the forward direction. A steering shaft 70 is inserted in the head pipe 20 in a rotatable manner. The handle 16 is attached at an upper end of the steering shaft 21. A pair of front forks 21 is connected to a lower end of the steering shaft 70 through a bracket. The front wheel 12 is attached at lower ends of the front forks 21 in a rotatable manner. The vehicle body frame 15 includes a front frame 151 that is inclined downward in the backward direction from the head pipe 20.

The vehicle body frame 15 is covered with a vehicle body cover 22. The vehicle body cover 22 is for example made of synthetic resin. The vehicle body cover 22 has a footboard 23, an under cover 231, a front cover 24, a rear cover 25, a handle cover 26, a front fender 27, a rear fender 28, and a side cover 29.

The footboard 23 is provided under and ahead of the seat 17. The footboard 23 extends in a front-back direction. The under cover 231 is provided under the footboard 23. The under cover 231 extends in the front-back direction

The front cover 24 is positioned ahead of the seat 17. The front cover 24 is positioned ahead of the head pipe 20. The front cover 24 is provided with a headlight 32.

The rear cover 25 is provided behind the front cover 24. The rear cover 25 is provided behind the head pipe 20. The rear cover 25 extends in the up-down direction. The rear cover 25 is provided behind the front frame 151.

The handle cover 26 covers a part of the handle 16. The handle cover 26 is provided above the front cover 24.

The front fender 27 is provided above the front wheel 12. The front fender 27 is provided under the front cover 24. The front fender 27 is provided to project ahead of the front cover 24. The rear fender 28 is provided above the rear wheel 14.

The side cover 29 is provided under the seat 17. The side cover 29 is positioned above the rear wheel 14. The side cover 29 extends backward from under the seat 17.

The handle 16 is provided ahead of the seat 17. The handle 16 extends in the left-right direction. Grips that can be held by a rider are provided at the ends of the handle 16.

The seat 17 is provided above the power unit 18. A storage space capable of storing items such as a helmet is provided under the seat 17.

The power unit 18 is provided in the vicinity of the rear wheel 14. A CVT case 31 provided in the power unit 18 is exposed from the vehicle body cover 22.

### Front of Motorcycle

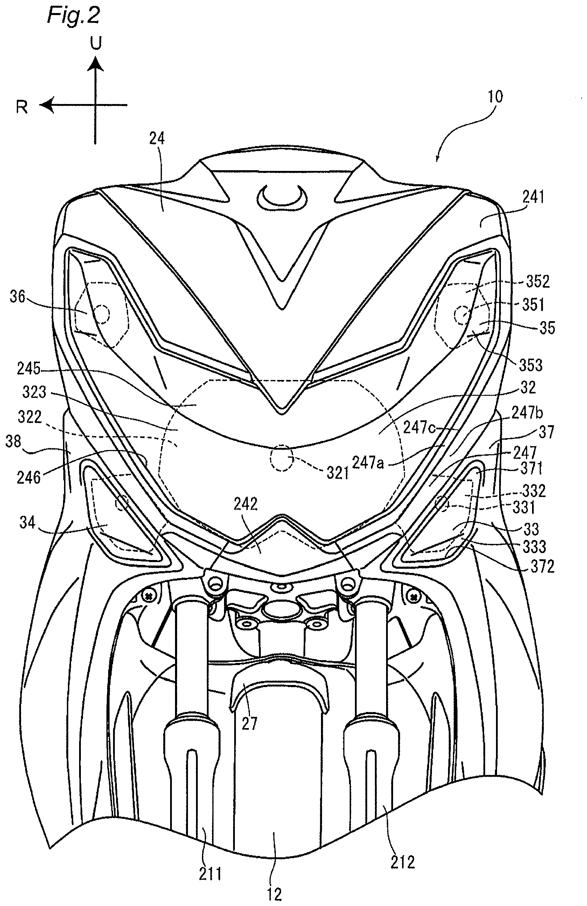

Fig. 2 is a partly enlarged view of the motorcycle 10 as viewed from the front. In Fig. 2, the handle 16 and the handle cover 26 are not shown.

The front forks 21 include a first front fork 211 and a second fork 212. The first front fork 211 is provided on the right side of the front wheel 12 in the vehicle-widthwise direction. The second front fork 212 is provided on the left side of the front wheel 12. The front cover 24 is provided above the front wheel 12.

The front cover 24 is provided with the headlight 32, a first position light 33, a second position light 34, a first flasher 35, and a second flasher 36. The front cover 24 includes a first front cover 241, a second front cover 37, and a third front cover 38 (that corresponds to a second front cover according to the present invention). The first front cover 241, the second front cover 37, and the third front cover 38 are formed by a single member.

The first front cover 241 is provided in the center in the vehicle-widthwise direction. The first front cover 241 is positioned above the front wheel 12 when viewed from the front. The first front cover 241 is connected to the rear cover 25. The second front cover 37 is positioned under and on the left side of the first front cover 241. The right end of the second front cover 37 is positioned above the second front fork 212. The second front cover 37 is provided on the left side of the front wheel 12 when viewed from the front. The left end of the third front cover 38 is positioned above the first front fork 211. The third front cover 38 is provided on the right side of the front wheel 12 when viewed from the front.

The headlight 32 illuminates ahead of the motorcycle 10. The headlight 32 includes a headlight bulb 321, a headlight reflector 322, and a headlight cover 323. The headlight 32 is provided in the center of the front cover 24 in the vehicle widthwise direction.

The headlight bulb 321 emits light. The headlight bulb 321 is provided in the center of the headlight 32 in the vehicle widthwise direction. The headlight bulb 321 is positioned below the center of the front cover 24 in the up-down direction of the vehicle widthwise center of the front cover 24.

The headlight reflector 322 reflects a part of light from the headlight bulb 321 in the forward direction. The headlight reflector 322 is provided around the headlight bulb 321. The headlight reflector 322 extends radially forward from the back of the headlight bulb 321. The headlight reflector 322 has a larger width in the vehicle-widthwise direction than its size in the up-down direction.

The headlight cover 323 covers the front of the headlight bulb 321 and the headlight reflector 322. Light emitted from the headlight bulb 321 passes through the headlight cover 323.

The first position light 33 is provided at the second front cover 37. The first position light 33 includes a position light bulb 331, a position light reflector 332, and a position light cover 333. The first position light 33 is provided on the outer side of the headlight 32 in the vehicle widthwise direction. The first position light 33 is provided on the left side of the headlight 33 in the vehicle widthwise direction. The first position light 33 is positioned below the headlight bulb 321. A part of the first position light 33 overlaps the headlight 32 in the height-wise direction (vertical direction).

The position light bulb 331 emits light. The position light bulb 331 is positioned on the left side of the headlight reflector 322 in the vehicle widthwise direction. The position light bulb 331 is positioned below the headlight bulb 321 in the up-down direction.

The position light reflector 332 reflects light from the position light bulb 331. An upper end of the position light reflector 332 is positioned on the left side of the headlight reflector 322. A right end of the position light reflector 332 overlaps the headlight reflector 322 in the vehicle widthwise direction. A lower end of the position light reflector 332 is positioned below a lower end of the headlight 32.

The position light cover 333 covers the position light bulb 331 and the position light reflector 332.

The second position light 34 has the same structure as that of the first position light 33, and therefore a detailed description thereof will not be provided. The second position light 34 is provided in a position symmetrical to the first position light 33 with respect to the vehicle widthwise center. The second position light 34 is provided at the third front cover 38.

The first flasher 35 includes a flasher bulb 351, a flasher reflector 352, and a flasher cover 353. The first flasher 35 is positioned more on the outer side than the headlight 32 in the vehicle widthwise direction. The first flasher 35 is positioned on the left side of the headlight 32. A part of the first flasher 35 overlaps a part of the first position light 33 in the vehicle widthwise direction. The first flasher 35 is positioned above the first position light 33. The first flasher 35 is positioned above the headlight 32.

The flasher bulb 351 emits light. The flasher bulb 351 is positioned above an upper end of the headlight 32. The flasher bulb 351 is positioned more on the outer side than the position light bulb 331 of the position light 33 in the vehicle widthwise direction.

The flasher reflector 352 reflects light from the flasher bulb 351. The flasher reflector 352 is provided around the flasher bulb 351. A lower end of the flasher reflector 352 is positioned above an upper end of the headlight 32. A vehicle widthwise outer end of the flasher reflector 352 is positioned more on the outer side than a vehicle widthwise outer end of the position light reflector 332.

The flasher cover 353 covers the flasher bulb 351 and the flasher reflector 352. The flasher cover 353 is integrally formed with the headlight cover 323. The headlight 32, the first flasher 35, and the second flasher 36 together form the light unit. The headlight bulb 321, the flasher bulb 351, the headlight reflector 322 and the flasher reflector 352 are provided in a space surrounded by the light cover including the headlight cover 323 and the flasher cover 353 and a housing for the light unit.

The second flasher 36 has the same structure as that of the first flasher 35 and therefore a detailed description thereof is not provided. The second flasher 36 is provided in a position symmetrical to the first flasher 35 with respect to the vehicle widthwise center.

The first front cover 241 is provided with the headlight 32. The first front cover 241 includes a light positioning portion 245. In the light positioning portion 245, the headlight 32, the first flasher 35, and the second flasher 36 are provided. The light positioning portion 245 includes an opening 246 through which the headlight cover 323 is exposed. The first front cover 241 includes a lower cover 242 positioned under the headlight 32. The lower cover 242 is positioned in the center of the front cover 24 in the vehicle-widthwise direction. The first front cover 241 includes a side cover portion 247 provided between the headlight cover 323 and the position light cover 333. The side cover portion 247 is provided between the headlight cover 323 and the position light cover 333 when viewed from a side. The side cover portion 247 includes two inclined surfaces 247a and 247b inclined at different angles. The border line 247c between the two inclined surfaces 247a and 247b of the side cover portion 247 extend upward and outward in the vehicle-widthwise direction when viewed from the front.

The second front cover 37 is provided with the first position light 33. The second front cover 37 includes a first light positioning portion 371 at which the first position light 33 can be provided. The first light positioning portion 371 has an opening 372 that can expose a part of the position light cover 333. A part of the second front cover 37 overlaps the headlight 32 in the vehicle-widthwise direction. A part of the second front cover 37 overlaps the headlight 32 in the up-down direction. The second front cover 37 is positioned under the first flasher 35. A part of the second front cover 37 overlaps the first flasher 35 in the vehicle widthwise direction.

The third front cover 38 has the same structure as that of the second front cover 37 and therefore a detailed description thereof is not provided. The third front cover 38 is provided symmetrically to the second front cover 37 with respect to the vehicle-widthwise center.

### Rear Cover

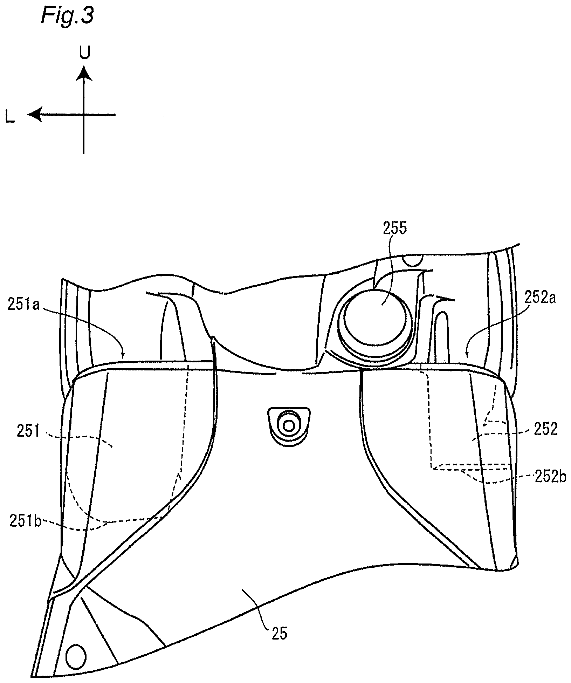

Fig. 3 is a view of a rear cover 25 seen from the back. Fig. 3 shows a part of the rear cover 25.

The rear cover 25 is provided with an ignition keyhole 255. The rear cover 25 has first and second pockets 251 and 252.

The first pocket 251 is provided on the left side of the vehicle-widthwise center. The first pocket 251 can store items. The first pocket 251 has a first opening 251a at its upper end. The first pocket 251 extends downward from the first opening 251a. The first pocket 251 has a first bottom 251b at its lower end.

The second pocket 252 is provided on the right side of the vehicle-widthwise center. The second pocket 252 has a second opening 252a and a second bottom 252b. The second pocket can store items. The second pocket 252 has the second opening 252a at its upper end. The second pocket 252 extends downward from the second opening 252a. The second pocket 252 has the second bottom 252b at its lower end. The second bottom 252b is positioned above the first bottom 251b. The second pocket 252 has a different depth from that of the first pocket 251. The depth of the second pocket 252 is smaller than that of the first pocket 251.

### Side of Front Cover and Rear Cover

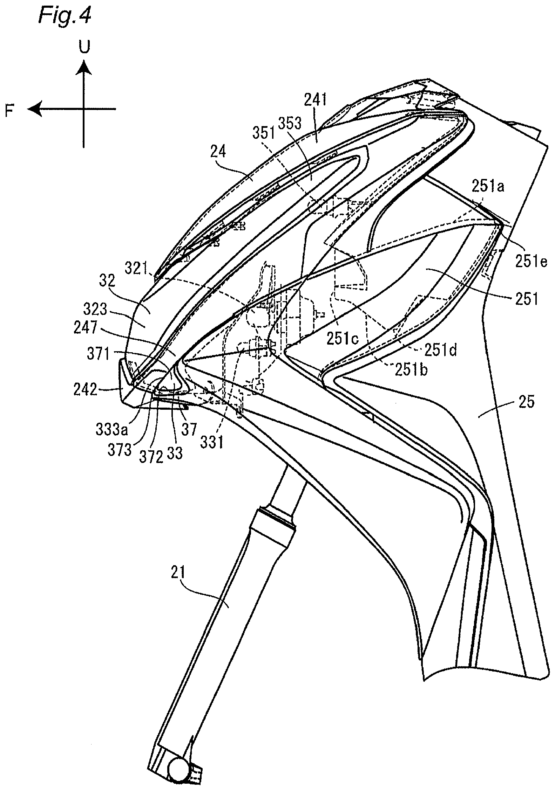

Fig. 4 is a partly side view of the front cover 24 and the rear cover 25 viewed from the outer side in vehicle-widthwise direction. In Fig. 4, the rear wheel 12 is not shown.

The first front cover 241 is inclined upward in the backward direction. A front end line of the first front cover 241 when viewed from a side is inclined upward in the backward direction. The front end line of the first front cover 241 when viewed from a side is arch-shaped. The parts of the headlight cover 323 and the flasher cover 353 exposed from the first front cover 241 are inclined upward in the backward direction.

The front end 373 of the second front cover 37 is positioned behind the front end of the front cover 24. The front end 373 of the second front cover 37 is positioned behind the front end of the lower cover 242. In a side view, the first positioning portion 371 is inclined upward in the backward direction. The position light cover 333 includes a flat portion 333a. The flat portion 333a is exposed from the opening 372 of the second front cover 37. In a side view, the flat portion 333a is inclined upward in the backward direction. The flat portion 333a extends in the vehicle-widthwise direction and the left and right ends of the flat portion 333a are inclined at substantially equal angles with respect to the horizontal plane. Therefore, the flat portion 333a can hardly be recognized in a side view.

The headlight bulb 321 is positioned behind the first position light 33 in the front-back direction. The headlight bulb 321 is positioned ahead of the first flasher bulb 351 in the front-back direction. The first position light bulb 331 is positioned ahead of the first flasher bulb 351.

The first pocket 251 is positioned behind the headlight bulb 321 and the position light bulb 331. The first opening 251a of the first pocket 251 is positioned below the first flasher bulb 351. The upper end 251e of the first pocket 251 is positioned at a rear end of the first opening 251a. The first bottom 251b of the first pocket 251 overlaps the headlight bulb 321 in the up-down direction. The first bottom 251b of the first pocket 251 is positioned above the position light bulb 331. The first bottom 251b of the first pocket 251 includes a surface inclined downward in the backward direction. The lower end 251d of the first bottom 251b is positioned at a rear part of the first bottom 251b. The first pocket 251 is inclined downward and forward from the first opening 251a. The front end 251c of the first pocket 251 overlaps the first flasher bulb 351 in the front-back direction. The first bottom 251b overlaps an upper end of the flasher cover 353 in the front-back direction.

### Positional Relation between Pockets, Headlight, Position Light, and Flashers

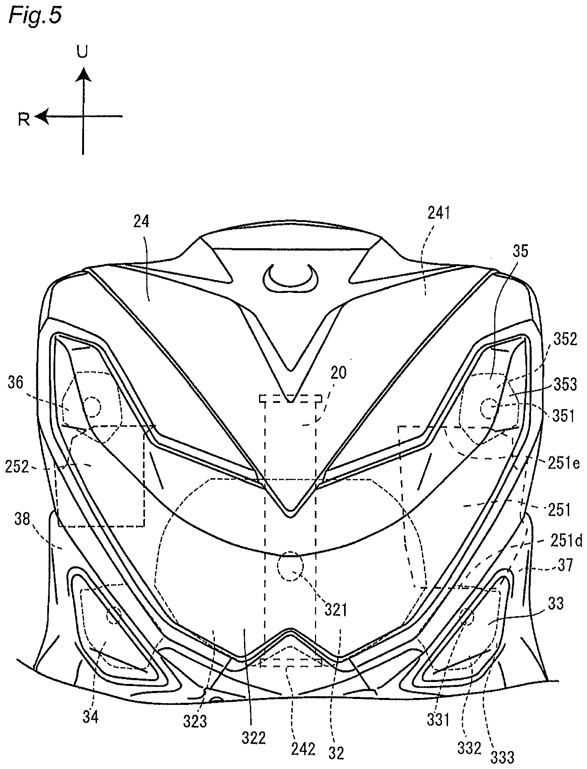

Fig. 5 is a front view of the front cover 24. In Fig. 5, the first and second pockets 251 and 252 are indicated by broken lines.

The first pocket 251 is positioned on the outer side of the headlight bulb 321 in the vehicle-widthwise direction. The first pocket 251 is positioned on the outer side of the head pipe 20 in the vehicle-widthwise direction. The first pocket 251 is positioned on the left side of the headlight bulb 321. A part of the first pocket 251 overlaps the headlight reflector 322 in the vehicle-widthwise direction. The lower end 251d of the first pocket 251 is positioned above the position light bulb 331 in the up-down direction. The lower end 251d of the first pocket 251 is positioned below the upper end of the position light cover 333 in the up-down direction. The upper end 251e of the first pocket 251 is positioned below the flasher bulb 351. The upper end 251e of the first pocket 251 is positioned above the lower end of the flasher reflector 352. The first pocket 251 overlaps the flasher bulb 351 and the position light bulb 331 in the vehicle-widthwise direction. The position light bulb 331 is positioned below the first bottom 251b of the first pocket 251.

The second pocket 252 has the same structure as that of the first pocket 251 but its width in the vehicle-widthwise direction is smaller than that of the first pocket 251. The second pocket 252 is positioned more on the outer side than the vehicle widthwise outer end of the headlight reflector 322 in the vehicle-widthwise direction.

### Features of Embodiments

Now, features of the embodiment will be described.

According to the embodiment described above, the position light 33 is not provided under the headlight bulb 321. According to the embodiment, the position light 33 is provided on the outer side of the headlight 32 in the vehicle-widthwise direction. Therefore, according to the embodiment, light from the headlight bulb 321 and light from the position light bulb 331 can be distinguished from each other more easily.

According to the embodiment, the first and second pockets 251 and 252 are provided on the outer side of the headlight bulb 321 in the vehicle-widthwise direction. The first pocket 251 is positioned above the position light bulb 331. The first pocket 251 is provided below the flasher bulb 351. Therefore, according to the embodiment described above, the flasher bulb 351 and the first position light 33 can be prevented from limiting the size of the first pocket 251.

According to the embodiment, the first position light 33 is provided on the outer side of the headlight 32 in the vehicle-widthwise direction. According to the embodiment, the upper end of the first position light 33 is provided in a position overlapping the first bottom 251b of the first pocket 251 in the up-down direction. Therefore, if the first position light 33 is positioned in the back, the size of the first pocket 251 is hardly limited, so that the first pocket 251 may have a sufficient size.

According to the embodiment, the handle cover 26 is provided above the front cover 24 and therefore the space that can be used to provide the headlight 32 and the like is limited. According to the embodiment, light from the headlight bulb 321 and light from the position light bulb 331 can be distinguished from each other more easily, so that the front cover 24 can be prevented from becoming large in size and the first pocket 251 can have a sufficient size.

According to the embodiment, the front end of the second front cover 37 is provided behind the front end of the first front cover 241. If the front end of the second front cover 37 is positioned in the same position in the front-back direction as the front end of the first front cover 241, the front surface of the first front cover 241 is substantially continuous with the front surface of the second front cover 37. In this arrangement, it may look as if the widthwise length of the front cover is large and give an impression of not being compact. As the second front cover 37 is provided in the back, the front surface of the first front cover 241 is not continuous with the front surface of the second front cover 37, so that the front cover 24 may have a compact structure. However, depending on the positioning of the pocket, the position of the pocket and the position of the position light overlaps, which may reduce the size of the pocket. In the above-described embodiment, however, if the second front cover 37 is provided behind the first front cover 241, the first pocket 251 is kept from becoming small in size. Therefore, the first pocket 251 may have a sufficient size and the second front cover 37 can be provided behind the first front cover 241, so that the front cover 24 can be provided in a compact form.

According to the above-described embodiment, the first position light 33 includes the flat portion 333a. According to the above-describe embodiment, the flat portion 333a is exposed from the opening 372 of the second front cover 37. In this arrangement, the headlight 32 can be recognized from the outer side in the vehicle widthwise direction more easily than the case in which the first position light 33 is exposed from the opening 372. If the first position light 33 is exposed from the opening 372, the headlight 32 must be moved forward in order to allow the headlight 32 to be recognized more easily from the outer side in the vehicle widthwise direction. According to the above-described embodiment, however, the part of the first position light 33 exposed from the opening 372 is flat-shaped, so that the headlight 32 does not have to be moved forward, and the front cover 24 can be prevented from being prolonged in the front-back direction by the forward movement of the headlight 32. The flat portion 333a of the position light 33 is exposed from the opening 372 of the second front cover 37. Therefore, as compared to the case in which the position light cover is viewed in a side view, the position light can be provided in a compact shape in the front-back direction, so that the front cover 24 can be prevented from becoming large in size.

According to the above-describe embodiment, the headlight reflector 322 and the position bulb 331 overlap in the front-back direction. Therefore, the position light bulb 331 is positioned ahead of the first pocket 251 in the front-back direction but does not restrict the size of the first pocket 251.

According to the above-described embodiment, the position light bulb 331 and the flasher bulb 351 are positioned on the outer side than the vehicle widthwise end of the headlight reflector 322. Therefore, in the above-described embodiment, the headlight 32 can have a sufficient size.

According to the above-described embodiment, the lower end of the first position light 33 is positioned below the lower end of the headlight 32. Therefore, in the embodiment, the first position light 33 is less likely to prevent the headlight 32 from becoming large in size.

According to the embodiment, the lower end of the flasher cover 353 is positioned ahead of the first opening 251a. According to embodiment, the flasher bulb 351 is positioned above the first opening 251a. Therefore, the flasher 35 does not occlude the first opening 251a of the first pocket 251, so that items can be placed in the first pocket 251 more easily.

According to the above-described embodiment, the first pocket 251 is provided on the outer side in the vehicle widthwise direction of the head pipe 20. The head pipe 20 is inclined downward in the forward direction. A space for rider's feet can be formed easily on the outer side of the head pipe 20 in the vehicle widthwise direction. According to the embodiment, the space to place the rider's feet is secured and the first pocket 251 can be large.

### Other Embodiments

In the foregoing, the scooter type motorcycle according to the embodiment has been described but the invention is not limited to this example and may be applied to a three-wheel or a four-wheel saddle riding type vehicle.

According to the embodiment, the front cover 24 includes the first front cover 241, the second front cover 37, and the third front cover 38 in a discrete form, while the invention is not limited to this arrangement. As for the front cover 24, the first front cover 241, the second front cover 37, and the third front cover 38 may be formed integrally.

In the above-described embodiment, the first pocket 251 is inclined forward and downward. However, the invention is not limited to this arrangement. The first pocket 251 may have a different shape. For example, the first pocket 251 may have a shape that extends in the up-down direction.

According to the above-described embodiment, the footboard 23 is flat, but the invention is not limited to this example. For example, a part of the footboard may be expanded or raised as compared to the other part.

According to the above-described embodiment, only the first pocket 251 satisfies a relation as recited in claim 1. However, the second pocket 252 may satisfy the relation as recited in claim 1. When at least one of the first and second pockets 231 and 252 satisfies the relation as recited in claim 1, the pocket that satisfies the relation as recited in claim 1 can have a sufficient size.

According to the embodiment, the first and second pockets 251 and 252 have different depths. However, the first and second pockets 251 and 252 may have the same depth. Alternatively, the first pocket 251 may be shallower than the second pocket 252.

According to the embodiment, the first front cover 241, the second front cover 37, and the third front cover 38 are formed integrally. However, the first front cover 241, the second front cover 37, and the third front cover 38 may be formed discretely and the manner of dividing the cover is not limited to that of the above-described embodiment.

According to the embodiment, the headlight and the flasher are formed integrally. However, the invention is not limited to this example and the headlight and the flasher may be formed discretely. The headlight, the flasher, and the position light may be formed integrally.

## Claims

1. A saddle riding type vehicle, comprising:
a head pipe (20);
a steering shaft (21) inserted in the head pipe (20) rotatably relative to the head pipe (20);
a handle (16) connected to an upper part of the steering shaft (21);
a handle cover (26) covering the handle (16);
a front cover (24) that covers a front part of the head pipe (20) and is inclined upward and backward from the front;
a rear cover (25) that covers a rear part of the head pipe (20) and extends at least in an up-down direction;
a footboard (23) connected to a lower part of the rear cover (25);
a headlight (32) positioned at a center of the front cover (24) in a vehicle widthwise direction;
a pocket (251) provided at the rear cover (25) in a position that is on an outer side of the head pipe (20) in the vehicle widthwise direction, wherein, in a side view, at least part of the pocket (251) is positioned between a virtual horizontal line through an upper end of the headlight (32) and a virtual horizontal line through a lower end of the headlight (32) in the up-down direction;
a position light (33) attached at the front cover (24), wherein at least a part of the position light (33) is positioned between a virtual vertical line through one end of the pocket (251) in the vehicle widthwise direction and a virtual vertical line through the other end of the pocket (251) in the vehicle widthwise direction; and
a flasher (35) attached at the front cover (24) and positioned above the position light (33), wherein
the flasher (35) includes a flasher bulb (351),
the pocket (251) includes a first opening (251a) and a bottom (251b),
the pocket (251) extends as it is inclined forward and downward from the first opening (251a),
the bottom (251b) includes an inclined surface that is inclined downward in a backward direction,
an upper end of the position light (33) overlaps the bottom (251b) in the up-down direction when viewed from the front,
in a front view, at least a part of the position light (33) is provided in a position between the virtual horizontal line through the upper end of the headlight (32) and the virtual horizontal line through the lower end of the headlight (32) in a height-wise direction,
the flasher bulb (351) is provided above the pocket (251).

2. The saddle riding type vehicle according to claim 1, wherein the front cover (24) includes first and second front covers (241, 37), and
the first front cover (241) is attached with the headlight (32),
the second front (37) cover is attached with the position light (33), and
a front end of the second front cover (37) is positioned behind a front end of the first front cover (241).

3. The saddle riding type vehicle according to claim 2, wherein the position light (33) further includes a position bulb (331) and a position light cover (333) arranged to cover a front part of the position bulb (331),
the second front cover (37) includes a light positioning portion (371) at which the position light (33) can be provided,
the light positioning portion (371) includes a second opening (372), and
the position light cover (333) includes a flat portion exposed from the second opening (372).

4. The saddle riding type vehicle according to claim 2 or 3, wherein the headlight (32) includes a reflector (322) provided around the headlight bulb (321), and
the position bulb (331) is provided in a position that overlaps the reflector (322) in a front-back direction.

5. The saddle riding type vehicle according to claim 4, wherein the position bulb (331) and the flasher bulb (351) are positioned more on the outer side in the vehicle widthwise direction than a vehicle widthwise end of the reflector (322).

6. The saddle riding type vehicle according to any one of claims 1 to 5, wherein a lower end of the position light (33) is positioned below a lower end of the headlight (32).

7. The saddle riding type vehicle according to any one of claims 1 to 6, wherein the flasher (35) includes a flasher cover (353) arranged to cover a front part of the flasher bulb (351),
a lower end of the flasher cover (353) is provided ahead of the first opening (251a), and
the flasher bulb (351) is positioned above the first opening (251a).

8. The saddle riding type vehicle according to claim 3, wherein the headlight (32) further includes a headlight cover (323) arranged to cover a front part of the headlight bulb (321), and
the front cover (24) includes a side cover portion (247) provided between the headlight cover (323) and the position light cover (333).

9. The saddle riding type vehicle according to any one of claims 1 to 8, wherein the headlight bulb (321) is positioned ahead of the bottom (251b).

## Patentansprüche

1. Ein Fahrzeug vom Sattelreittyp, das folgende Merkmale aufweist:
ein Kopfrohr (20);
eine Lenkwelle (21), die drehbar relativ zu dem Kopfrohr (20) in das Kopfrohr (20) eingefügt ist;
einen Griff (16), der mit einem oberen Teil der Lenkwelle (21) verbunden ist;
eine Griffabdeckung (26), die den Griff (16) abdeckt;
eine vordere Abdeckung (24), die einen vorderen Teil des Kopfrohrs (20) bedeckt und von der Vorderseite nach oben und nach hinten geneigt ist;
eine hintere Abdeckung (25), die einen hinteren Teil des Kopfrohrs (20) bedeckt und sich zumindest in einer Aufwärts-Abwärts-Richtung erstreckt;
ein Trittbrett (23), das mit einem unteren Teil der hinteren Abdeckung (25) verbunden ist;
einen Scheinwerfer (32), der in einer Fahrzeugbreiterichtung in einer Mitte der vorderen Abdeckung (24) positioniert ist;
eine Tasche (251), die an der hinteren Abdeckung (25) an einer Position vorgesehen ist, die sich in der Fahrzeugbreiterichtung an einer Außenseite des Kopfrohrs (20) befindet, wobei in einer Seitenansicht zumindest ein Teil der Tasche (251) zwischen einer virtuellen horizontalen Linie durch ein oberes Ende des Scheinwerfers (32) und einer virtuellen horizontalen Linie durch ein unteres Ende des Scheinwerfers (32) in der Aufwärts-Abwärts-Richtung positioniert ist;
ein Positionslicht (33), das an der vorderen Abdeckung (24) befestigt ist, wobei zumindest ein Teil des Positionslichts (33) zwischen einer virtuellen vertikalen Linie durch ein Ende der Tasche (251) in der Fahrzeugbreiterichtung und einer virtuellen vertikalen Linie durch das andere Ende der Tasche (251) in der Fahrzeugbreiterichtung positioniert ist; und
einen Blinker (35), der an der vorderen Abdeckung (24) angebracht ist und über dem Positionslicht (33) positioniert ist, wobei
der Blinker (35) eine Blinkerlampe (351) umfasst,
die Tasche (251) eine erste Öffnung (251a) und eine Unterseite (251b) umfasst,
die Tasche (251) sich ausdehnt, wenn sich dieselbe von der ersten Öffnung (251a) nach vorne und unten neigt,
die Unterseite (251b) eine geneigte Oberfläche umfasst, die in einer Rückwärtsrichtung nach unten geneigt ist,
ein oberes Ende des Positionslichts (33) von der Vorderseite aus gesehen die Unterseite (251b) in der Aufwärts-Abwärts-Richtung überlappt,
in einer Vorderansicht zumindest ein Teil des Positionslichts (33) in einer Höhenrichtung an einer Position zwischen der virtuellen horizontalen Linie durch das obere Ende des Scheinwerfers (32) und der virtuellen horizontalen Linie durch das untere Ende des Scheinwerfers (32) vorgesehen ist,
die Blinkerlampe (351) über der Tasche (251) vorgesehen ist.

2. Das Fahrzeug vom Sattelreittyp gemäß Anspruch 1, bei dem die vordere Abdeckung (24) eine erste und eine zweite vordere Abdeckung (241, 37) umfasst und
die erste vordere Abdeckung (241) mit dem Scheinwerfer (32) angebracht ist,
die zweite vordere Abdeckung (37) mit dem Positionslicht (33) angebracht ist und
ein vorderes Ende der zweiten vorderen Abdeckung (37) hinter einem vorderen Ende der ersten vorderen Abdeckung (241) positioniert ist.

3. Das Fahrzeug vom Sattelreittyp gemäß Anspruch 2, bei dem das Positionslicht (33) ferner eine Positionslampe (331) und eine Positionslichtabdeckung (333) umfasst, die angeordnet ist, um einen vorderen Teil der Positionslampe (331) zu bedecken,
die zweite vordere Abdeckung (37) einen Lichtpositionierungsabschnitt (371) umfasst, an dem das Positionslicht (33) vorgesehen sein kann,
der Lichtpositionierungsabschnitt (371) eine zweite Öffnung (372) umfasst und
die Positionierungslichtabdeckung (333) einen flachen Abschnitt umfasst, der von der zweiten Öffnung (372) freigelegt ist.

4. Das Fahrzeug vom Sattelreittyp gemäß Anspruch 2 oder 3, bei dem der Scheinwerfer (32) einen Reflektor (322) umfasst, der um die Scheinwerferlampe (321) herum vorgesehen ist und
die Positionslampe (331) an einer Position vorgesehen ist, die den Reflektor (322) in einer Vorwärts-Rückwärts-Richtung überlappt.

5. Das Fahrzeug vom Sattelreittyp gemäß Anspruch 4, bei dem die Positionslampe (331) und die Blinkerlampe (351) in der Fahrzeugbreiterichtung mehr an der Außenseite angeordnet sind als ein Fahrzeugbreiteende des Reflektors (322).

6. Das Fahrzeug vom Sattelreittyp gemäß einem der Ansprüche 1 bis 5, bei dem ein unteres Ende des Positionslichts (33) unter einem unteren Ende des Scheinwerfers (32) positioniert ist.

7. Das Fahrzeug vom Sattelreittyp gemäß einem der Ansprüche 1 bis 6, bei dem der Blinker (35) eine Blinkerabdeckung (353) umfasst, die angeordnet ist, um einen vorderen Teil der Blinkerlampe (351) zu bedecken,
ein unteres Ende der Blinkerabdeckung (353) vor der ersten Öffnung (251a) vorgesehen ist und
die Blinkerlampe (351) über der ersten Öffnung (251a) positioniert ist.

8. Das Fahrzeug vom Sattelreittyp gemäß Anspruch 3, bei dem der Scheinwerfer (32) ferner eine Scheinwerferabdeckung (323) umfasst, die angeordnet ist, um einen vorderen Teil der Scheinwerferlampe (321) zu bedecken und
die vordere Abdeckung (24) einen Seitenabdeckungsabschnitt (247) umfasst, der zwischen der Scheinwerferabdeckung (323) und der Positionslichtabdeckung (333) vorgesehen ist.

9. Das Fahrzeug vom Sattelreittyp gemäß einem der Ansprüche 1 bis 8, bei dem die Scheinwerferlampe (321) vor der Unterseite (251) positioniert ist.

## Revendications

1. Véhicule de type selle, comprenant:
un tube frontal (20);
un arbre de direction (21) inséré dans le tube frontal (20) de manière rotative par rapport au tube frontal (20);
une poignée (16) connectée à une partie supérieure de l'arbre de direction (21);
un couvercle de poignée (26) recouvrant la poignée (16);
un couvercle avant (24) qui recouvre une partie avant du tube frontal (20) et est incliné vers le haut et vers l'arrière depuis l'avant;
un couvercle arrière (25) qui recouvre une partie arrière du tube frontal (20) et s'étend au moins dans une direction de haut en bas;
un marchepied (23) connecté à une partie inférieure du couvercle arrière (25);
un phare (32) positionné au centre du couvercle avant (24) dans la direction de la largeur du véhicule;
une poche (251) prévue sur le couvercle arrière (25) à une position qui se trouve d'un côté extérieur du tube frontal (20) dans la direction de la largeur du véhicule, où, dans une vue de côté, au moins une partie de la poche (251) est positionnée entre une ligne horizontale virtuelle passant par une extrémité supérieure du phare (32) et une ligne horizontale virtuelle passant par une extrémité inférieure du phare (32) dans la direction de haut en bas;
un feu de position (33) fixé au couvercle avant (24), où au moins une partie du feu de position (33) est positionnée entre une ligne verticale virtuelle passant par une extrémité de la poche (251) dans la direction de la largeur du véhicule et un ligne verticale virtuelle passant par l'autre extrémité de la poche (251) dans la direction de la largeur du véhicule; et
un clignotant (35) fixé au couvercle avant (24) et positionné au-dessus du feu de position (33),
dans lequel
le clignotant (35) comporte une ampoule de clignotant (351),
la poche (251) comporte une première ouverture (251a) et un fond (251b),
la poche (251) s'étend telle qu'elle, inclinée vers l'avant et vers le bas à partir de la première ouverture (251a),
le fond (251b) comporte une surface inclinée qui est inclinée vers le bas dans une direction vers l'arrière,
une extrémité supérieure du feu de position (33) vient en chevauchement avec le fond (251b) dans la direction de haut en bas lorsque vue depuis l'avant,
dans une vue de face, au moins une partie du feu de position (33) est prévue à une position entre la ligne horizontale virtuelle passant par l'extrémité supérieure du phare (32) et la ligne horizontale virtuelle passant par l'extrémité inférieure du phare (32) dans la direction de la hauteur,
l'ampoule de clignotant (351) est prévue au-dessus de la poche (251).

2. Véhicule du type à selle selon la revendication 1, dans lequel le couvercle avant (24) comporte des premier et deuxième couvercles avant (241, 37), et
le premier couvercle avant (241) est fixé au phare (32),
le deuxième couvercle avant (37) est fixé au feu de position (33), et une extrémité avant du deuxième couvercle avant (37) est positionnée derrière une extrémité avant du premier couvercle avant (241).

3. Véhicule du type à selle selon la revendication 2, dans lequel le feu de position (33) comporte par ailleurs une ampoule de position (331) et un couvercle de feu de position (333) disposé de manière à couvrir une partie avant de l'ampoule de position (331),
le deuxième couvercle avant (37) comporte une partie de positionnement de feu (371) sur laquelle peut être prévu le feu de position (33),
la partie de positionnement de feu (371) comporte une deuxième ouverture (372), et
le couvercle de feu de position (333) comporte une partie plane exposée depuis la deuxième ouverture (372).

4. Véhicule du type à selle selon la revendication 2 ou 3, dans lequel le phare (32) comporte un réflecteur (322) prévu autour de l'ampoule de phare (321), et
l'ampoule de position (331) est prévue à une position qui vient en chevauchement avec le réflecteur (322) dans une direction avant-arrière.

5. Véhicule du type à selle selon la revendication 4, dans lequel l'ampoule de position (331) et l'ampoule de clignotant (351) sont positionnées plus du côté extérieur dans la direction de la largeur du véhicule qu'une extrémité dans la direction de la largeur du véhicule du réflecteur (322).

6. Véhicule du type à selle selon l'une quelconque des revendications 1 à 5, dans lequel une extrémité inférieure du feu de position (33) est positionnée au-dessous d'une extrémité inférieure du phare (32).

7. Véhicule du type à selle selon l'une quelconque des revendications 1 à 6, dans lequel le clignotant (35) comporte un couvercle de clignotant (353) disposé de manière à recouvrir une partie avant de l'ampoule de clignotant (351),
une extrémité inférieure du couvercle de clignotant (353) est prévue devant la première ouverture (251a), et
l'ampoule de clignotant (351) est positionnée au-dessus de la première ouverture (251a).

8. Véhicule du type à selle selon la revendication 3, dans lequel le phare (32) comporte par ailleurs un couvercle de phare (323) disposé de manière à couvrir une partie avant de l'ampoule de phare (321), et
le couvercle avant (24) comporte une partie de couvercle latérale (247) prévue entre le couvercle de phare (323) et le couvercle de feu de position (333).

9. Véhicule du type à selle selon l'une quelconque des revendications 1 à 8, dans lequel l'ampoule de phare (321) est positionnée devant le fond (251b).
